Europäisches Patentamt

European Patent Office

Office européen des brevets

(11) Publication number: **0 434 595 A2**

# EUROPEAN PATENT APPLICATION

(21) Application number: 90630212.0

(22) Date of filing: 05.12.90

(51) Int. Cl.⁵: **B32B 27/04, B41N 6/00**

(30) Priority: 21.12.89 US 456005

(43) Date of publication of application:
26.06.91 Bulletin 91/26

(84) Designated Contracting States:
DE FR GB IT NL

(71) Applicant: THE GOODYEAR TIRE & RUBBER COMPANY
1144 East Market Street
Akron, Ohio 44316-0001 (US)

(72) Inventor: Brymer, Timothy John
55 Juliette Street
N. Dartmouth, Massachusetts 02747 (US)

(74) Representative: Leitz, Paul
Goodyear Technical Center, Patent Department
L-7750 Colmar-Berg (LU)

(54) Backing laminate for flexographic printing and process for making same.

(57) A laminate comprising a flexible, low stretch open-mesh substrate encapsulated in a cured photopolymeric matrix.

FIG.2

EP 0 434 595 A2

# BACKING LAMINATE FOR FLEXOGRAPHIC PRINTING AND PROCESS FOR MAKING SAME

## Field of the Invention

This invention relates to laminates which are useful in flexographic printing operations. In particular, it relates to a low stretch, flexible laminate to be used as a backing for flexographic printing plates.

## Background of the Invention

U.S. Patent No. 4,074,481 discloses a photopolymer printing plate having a thin Mylar™ backing sheet attached thereto to provide dimensional stability. The backing sheet is affixed to a relatively rigid PVC mounting sheet which in turn is affixed to a printing cylinder with a resilient, compressible layer sandwiched between the mounting sheet and the cylinder. While such an arrangement provides added gauge and overall resiliency to the apparatus, it fails to provide added resiliency to the individual printing indicia. It is silent as to the construction of the resilient layer except that it is of a closed-cell foam construction. By mention of the use of caulking around the mounting sheet, it can be implied that the foam layer is subject to attack by the solvents and inks used in printing operations.

U.S. Patent No. 4,415,615 discloses a cellular pressure-sensitive membrane produced by coating each side of a tissue-like reinforcing web with a frothed pressure-sensitive adhesive photopolymer composition sandwiched between two releasable films followed by exposure to ultraviolet radiation to polymerize the composition to a pressure-sensitive adhesive state. The only reinforcement described is a non-woven spunbonded polyester. Such a reinforcement would be characterized as exhibiting excessive stretch when used as a laminate contemplated by the instant invention.

U.S. Patent No. 4,515,739 discloses a matrix board coating for use in the formation of printing plates. The coating, a mixture of thermosetting molding material, mold release agents, mineral or organic fillers, pigments, dyes, dispersants, surfactants, binders and chemical blowing agents, is generally applied to a substrate comprised of cellulose fibers, mineral fillers, a powdered phenolic resin and possibly other components. Among the other substrates suggested are plastic, glass or wire mesh. The foamed coating is placed on top of the substrate for pressing against a master plate to produce printing plates. There is no suggestion that the mesh is encapsulated by the foam or that it can be used as a backing for flexographic printing plates.

U.S. Patent No. 4,582,777 discloses a compressible printing plate comprising a base layer having a plastic film, metal or paper substrate and an adhesive;

a compressible layer of plastisol, organisol, elastomer foam or urethane foam and an adhesive ; and top layer of a photocurable liquid material. There is no suggestion that the substrate can be an open mash encapsulated in a photopolymeric matrix, that the laminate can be used as a backing for a flexographic printing plate or that a photopolymeric printing plate can be affixed to the foam layer without the use of an adhesive layer.

U.S. Patent Nos. 4,767,793 and 4,771,078 disclose a process for producing a cured foam photopolymer by frothing a photocurable, non-pressure-sensitive adhesive composition and spreading the froth between a variety of substrates to produce various laminates for use as graphic arts devices. The substrates disclosed are woven and non-woven fabrics and plastic films. There is no suggestion that the reinforcing substrate can be an open mesh encapsulated in a photopolymeric matrix in what essentially can be considered a one-stage process. For the information regarding photopolymeric compositions, equipment used and basic techniques which are also used in the instant invention, the disclosures of the '793 and '078 patents are hereby incorporated by reference.

## Brief Description of the Drawings

FIG. 1 is a schematic illustration of the process of producing a laminate according to the present invention.

FIG. 2 is a cross sectional view of one embodiment of the present invention.

FIG. 3 is a sectional view of another embodiment of the present invention.

## Detailed Description of the Invention

In accordance with the practice of the present invention, there is provided a laminate 10 comprising an open mesh substrate 12 in a matrix of a cured photopolymer 14. There is also provided a laminate 11 embodying the laminate 10 and further comprising a layer of a solid substrate 22. In addition, there is disclosed a method of producing a flexographic laminate comprising the steps of :

(a) providing an open mesh substrate ;

(b) spreading a layer of a photocurable composition onto said open mesh substrate while sandwiching the open mesh substrate and photocurable composition between two solid substrates to form a laminate ;

(c) passing the laminate through a spreading mechanism to set the gauge ; and

(d) exposing the laminate to actinic radiation to cure the photocurable composition.

A suitable open mesh substrate 12 is one which is flexible yet exhibits low stretch. It generally will have from about eight openings per inch to about eighteen openings per inch in each direction. It is to be understood that the number of openings per inch do not have to be the same in both directions. A preferred open mesh substrate is a vinyl coated fiberglass screening material having a nominal thickness of about 0.33 mm and nine openings per inch in both directions.

The open-mesh substrate can also be made of aramid Metal wire mesh can also be used, particularly for mounting on magnetized cylinders, however, at the expense of the greater flexibility of the other materials.

By solid substrate it is meant a tightly woven fabric, a non-woven fabric or a plastic film. Examples of the woven fabric are cotton, nylon, polyester, aramid, rayon, acrylics, and the like. Non-woven fabrics are produced by matting together fibers and bonding them by fusion, by the use of adhesives, or by needle punching. Examples of the plastic films are polyvinyl chloride, polyethylene, polypropylene, polyesters, and the like.

The photocurable composition which is particularly suitable for use in the practice of the present invention comprises : a polyester urethane acrylate oligomer ; hydroxyethylmethacrylate reactive diluent; and a photosensitizer. Optional ingredients which may be used in the composition are a plasticizer and a surfactant. A preferred photosensitizer is 2,2-dimethoxy-2-phenylacetophenone. A preferred plasticizer is a mixture of tri-aryl phosphates. A preferred surfactant is a polyoxyethyleneoctylphenol.

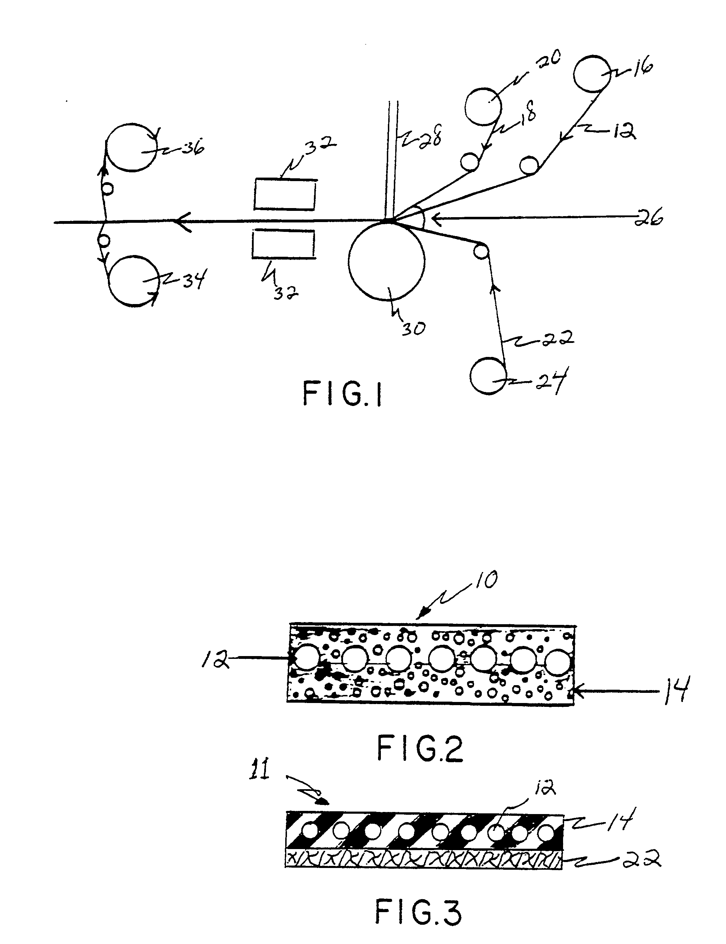

The photocurable composition can be used as is to provide a solid matrix encapsulating the open mesh substrate 12 as shown in FIG. 3 or if a compressible foam is desired as illustrated in FIG. 2, the photocurable composition can be mechanically frothed as described in the above-referenced '793 and '078 patents.

The process of the present invention comprises providing an open mesh substrate 12 as described above on a roll 16 and feeding the open mesh substrate 12 into a bank of photocurable composition 26 as the combination is fed sandwich style between layers of solid substrate 18, 22 which are fed from rolls 20 and 24, respectively. The sandwiched combination is fed through a spreading mechanism such as a knife 28 over roll 30 as illustrated in FIG. 1 in order to set the proper gauge on the laminate being produced. It is to be understood that the spreading mechanism could also be a roll over roll. Immediately downstream of the spreading mechanism is located a source of actinic radiation 32 which may be either above or below or on both sides of the sandwich combination. The actinic radiation polymerizes the photocurable composition to encapsulate the open mesh substrate.

Rolls 34 and 36 are used to take up the solid substrates, usually releasable plastic films, when producing laminate 10 illustrated in FIG. 2. In producing laminate 11 as illustrated in FIG. 3, it can be appreciated that only the solid substrate 18 need be removed on takeoff roll 36.

As can be seen, one advantage of the process of the instant invention is that it is a "one-stage" process since the open mesh substrate allows the photocurable composition to completely surround the substrate compared to a two-stage process which would be required were the substrate solid as described in the '793 and '078 patents. Another advantage can be seen in the production of laminate 11 wherein substrate 22 becomes bonded to the cured photopolymer during the polymerization without the requirements of an adhesive layer as taught in the prior art. The laminate 10 can be used as a compressible backing for a flexographic printing plate. It can be made with a gauge thickness of from about 0.5 mm to about 1.25 mm. It is also contemplated that the laminate 10 can also be used as a substrate layer in the production of flexographic printing plates, particularly of the photopolymer variety wherein a layer of photocurable composition is placed upon the substrate and is exposed to actinic radiation through a negative to produce the printing indicia.

Laminate 11 can generally be produced to a thickness from about 2 mm to about 3 mm and has utility as a compressible mounting board upon which a flexographic printing plate can be produced in a manner similar to what has been described above. It should be appreciated that laminate 11 could also be produced with a foam layer as illustrated in FIG. 2 for laminate 10.

The laminates of the instant invention have the advantage of being solvent resistant ; therefore, they can be placed directly under a printing plate for better printability, whereas some prior art compressible layers need to be caulked around the laminate in order to prevent their disintegration. The laminates of the present invention also have the advantage of better gauge control, generally to a tolerance of plus or minus 0.025 mm, which benefit accrues due to the process of polymerizing the photopolymer matrix immediately after setting the gauge.

While certain representative embodiments have been shown for the purpose of illustrating the present invention, it will be apparent to those skilled in the art that various changes and modifications may be made therein without departing from the spirit or scope of the invention.

## Claims

1. A laminate comprising a substrate in a matrix of a cured photopolymer characterized in that the substrate is an open mesh substrate.

2.  The laminate of claim 1 wherein the substrate is a vinyl-coated fiberglass screen.

3.  The laminate of claim 1 wherein the photopolymer is comprised of an oligomer and a reactive diluent.

4.  The laminate according to claim 1 wherein the photopolymer is foamed.

5.  The laminate according to claim 1 further comprising a layer of a solid substrate attached to a surface of the photopolymer.

6.  The laminate according to claim 5 wherein the solid substrate is selected from the group consisting of woven fabric, non-woven fabric and plastic film.

7.  A method of producing a flexographic laminate comprising the steps of :
    (a) providing a substrate ;
    (b) spreading a layer of a photocurable composition onto said substrate while sandwiching the substrate and photocurable composition between two solid substrates to form a laminate ;
    (c) passing the laminate through a spreading mechanism to set the gauge ; and
    (d) exposing the laminate to actinic radiation to cure the photocurable composition, characterized in that the substrate is an open mesh substrate.

8.  The method according to claim 7 further comprising the step of frothing the photocurable composition prior to spreading it onto the open mesh substrate.

FIG.1

FIG.2

FIG.3